# EUROPÄISCHE PATENTSCHRIFT

(11) **EP 1 312 686 B1**
(45) Veröffentlichungstag und Bekanntmachung des Hinweises auf die Patenterteilung: **16.01.2008**
(21) Anmeldenummer: 02024908.2
(22) Anmeldetag: 05.11.2002
(51) Int. Cl.: C22B 7/00, C22B 3/04, C22B 34/20, C22B 11/00, C25F 1/08, C25F 1/06

(54) **Verfahren zum elektrochemischen Aufschluss von Superlegierungsschrotten**
Electrochemical dissolution process for disintegrating superalloy scraps
Procédé électrochimique pour le traitement de dissolution de mitrailles des superalliages

(30) Priorität: 14.11.2001 DE 10155791
(43) Veröffentlichungstag der Anmeldung: 21.05.2003
(73) Patentinhaber: H.C. Starck GmbH, 38642 Goslar (DE)
(72) Erfinder: Stoller, Viktor,, 38667 Bad Harzburg (DE); Olbrich, Armin, Dr., 38723 Seesen (DE); Meese-Marktscheffel, Juliane, Dr., 38640 Goslar (DE); Mathy, Wolfgang, 38685 Langelsheim (DE); Erb, Michael, 38259 Salzgitter (DE); Nietfeld, Georg, Dr., 38667 Bad Harzburg (DE); Gille, Gerhard, Dr., 38640 Goslar (DE)
(74) Vertreter: Clauswitz, Kai-Uwe Wolfram

(56) Entgegenhaltungen:
- WO-A-99/13135
- GB-A- 1 520 058
- US-A- 4 119 458
- US-A- 5 776 329
- DATABASE WPI Section Ch, Week 199849 Derwent Publications Ltd., London, GB; Class M25, AN 1998-581468 XP002251242 & RU 2 110 590 C (AS USSR METAL INST), 10. Mai 1998 (1998-05-10)
- DATABASE WPI Section Ch, Week 199150 Derwent Publications Ltd., London, GB; Class M24, AN 1991-364698 XP002251243 & JP 03 243799 A (NIPPON STEEL CORP), 30. Oktober 1991 (1991-10-30)
- DATABASE WPI Section Ch, Week 200165 Derwent Publications Ltd., London, GB; Class L02, AN 2001-577918 XP002251244 & RU 2 172 294 C (TULA GEOLOGY RES ENTERPRISE), 20. August 2001 (2001-08-20)

## Beschreibung

Die vorliegende Erfindung betrifft ein Verfahren zum elektrochemischen Aufschluss von Superlegierungen, insbesondere Superlegierungsschrotten, insbesondere zum Zwecke der Rückgewinnung von seltenen und wertvollen Metallen wie Rhenium, Platin, Tantal und Hafnium.

Superlegierungen sind hochschmelzende, hochfeste und äußerst verschleißbeständige Legierungen aus einer vergleichsweise großen Anzahl einzelner Metalle, die vorwiegend im Turbinenbau, besonders Flugzeugturbinen, eingesetzt werden und die ihre besonderen Eigenschaften teilweise nur der Beimischung sehr seltener und teurer Elemente wie beispielsweise Tantal, Hafnium oder sogar Rhenium bzw. Platin verdanken und gemäß ihrer widerstandsfähigen Natur nach Ablauf ihrer Nutzungsdauer nur sehr schwer und bis auf den heutigen Tag nicht wirtschaftlich einer Wiederverwertung zuzuführen sind.

Dies führt seit Jahren zu einem unwiderbringlichen Verlust dieser strategischen Rohstoffe, hervorgerufen durch Einschmelzung besagter Superlegierungsschrotte in normale Stähle in der Größenordnung von beispielsweise bis zu 10 t/a Rhenium und 30 t/a Tantal, beides hochwertige Metalle, die weltweit nur begrenzt zur Verfügung stehen. Allein die Rhenium-Menge von 10 jato entspricht ca. einem Drittel der Weltjahresprimärproduktion und das bislang fehlende Recycling stellt nicht nur aus volkswirtschaftlicher Sicht, sondern auch -global gesehen- im Sinne des Responsible Care-Gedankens eine Verschwendung von Ressourcen dar. Tantal, zwar als Element selbst nicht so selten wie Rhenium, tritt in der Natur jedoch nur sehr beschränkt in Form abbauwürdiger Erze auf. Durchaus relevante Mengen werden daher zusätzlich aus Ta-haltigen Sn-Schlacken gewonnen, deren Ursprung vornehmlich in Thailand und Malaysia liegt. Aufgrund der sich explosionsartig entwickelnden Elektronikindustrie steht dem ständig steigenden Bedarf an Tantal eine immer schwächer werdende Rohstoffbasis gegenüber. Das Recycling der Superlegierungen mit Ta-Gehalten bis zu 8 % erscheint daher auch unter dem reinen Tantal-Aspekt wirtschaftlich und strategisch sinnvoll.

Zur Rückgewinnung der metallischen Bestandteile von Superlegierungen existieren eine Reihe von pyro- und hydrometallurgischen Ansätzen, die aber alle aufgrund ihrer kostenintensiven Komplexität bzw. Lösedauer nicht geeignet sind, eine tatsächlich praktikable Basis für ein wirtschaftliches Verfahren darzustellen.

So ist beispielsweise das Aufschmelzen von Superlegierungen unter Schutzgasatmosphäre und anschließende Verdüsung der Schmelze zu einem feinteiligen Pulver bekannt, wobei der eigentliche Aufschluss aber erst in einem zweiten Schritt am erzeugten Pulver selbst erfolgt, und zwar durch zeitaufwendige Behandlung mit anorganischen Säuren. Denkbar, jedoch natürlich ebenfalls beliebig aufwendig, wäre auch das Zerkleinern von Superlegierungs-Stückschrotten nach vorheriger geeigneter Versprödung durch aufwendige Mahlverfahren, da derartige Superlegierungsschrotte aufgrund ihrer hohen Festigkeit, Zähigkeit und außerordentlichen Verschleißbeständigkeit speziell auf diese Materialklasse abgestimmte/entwickelte Aufbereitungsverfahren/Mühlen erforderlich machten. Der eigentliche Aufschluss der Legierung erfolgt wiederum auf nasschemischem Wege durch Temperatur-Behandlung in Mineralsäuren geeigneter Konzentration und Zusammensetzung (z.B. Potter et al, Eff. Technol. Recycling Metal 1971, 35). Zur Abtrennung des Re aus den multimetallhaltigen Lösungen kann beispielsweise Solventextraktion kombiniert mit Sulfidfällungs- und Elektroabscheidungsreaktionen genutzt werden (z.B. Churchwood et al, J. Metals, 1963, September, 648).

Einen guten Überblick über oxidative, pyrometallurgische und hydrometallurgische Aufschlussversuche am speziellen Beispiel von S-816-Schrott, einer Re/Ta-freien Co-Basislegierung (40+%) mit hohen Anteilen an Cr (20 %) und Ni(20 %) sowie u.a. Fe, Nb, W und Mo im 4 %-Bereich, gibt ein Artikel von Kenworthy et al (Experimental Extraction of Strategic Components from S-816 Alloy Scrap, Report of Investigations 5786, United States Department Of The Interior, Bureau Of Mines, 1976), in dem auch elektrolytische Korrosionsuntersuchungen beschrieben sind: Als am Besten geeignet für diesen Schrottyp wird hier die Verwendung von Schwefelsäure als korrosives Elektrolytmedium bei 7x10⁻⁵ Hz (Umpolung alle 4 Stunden) dargestellt, wobei anschließend aus der Elektrolytlösung bei 20°C hydratisierte (Co, Ni, Fe)-Sulfatmischungen auskristallisiert und diese Intermediates Folgeaufarbeitungen unterzogen werden.

Weitere Verfahren, die den Aufschluss von Legierungsschrotten über elektrochemische Prozesse betreffen, sind:
RU2110590 offenbart ein Verfahren zur elektrochemischen Auflösung von Wolframschrotten in Salpetersäure, wobei üblicher hochfrequenter Wechselstrom eingesetzt wird.
JP3243799 lehrt die Entfernung von Schlacke an der Oberfläche von heißgewalzten Stählen unter Verwendung von Säuren und Anlegen einer elektrischen Spannung.
RU 2172294 offenbart ein Verfahren zur Rekuperation von Diamanten aus Bohrköpfen mit bipolarem Strom, wobei die Dauer der Strombehandlung in Abhängigkeit von verschiedenen Faktoren variiert wird.

- US Patentschrift 3649487: Die in Schrotten einer Fe/Ni/Co/Cu-Basislegierung enthaltenden hochschmelzenden Metalle (Cr/Mo/W) werden zunächst thermisch (über Schmelzprozess) durch Zusatz von nicht-metallischen Verbindungen der Gruppe III, IV oder V in Carbide, Boride, Silizide, Nitride oder Phosphide überführt, zu Anoden geschmolzen bzw. als Anoden geschaltet und dann einer anodischen Oxidation unterzogen. Dabei werden Ni, Co und Cu kathodisch abgeschieden, während die hochschmelzende Metalle als z.B. Carbide im Anodenschlamm zurückbleiben. Zu diesem Recycling von Ni, Co oder Kupfer fehlen jegliche Angaben über Stromstärke, Stromdichte, anodische/kathodische Stromausbeuten, genaue Elektrolytzusammensetzung, Vollständigkeit der Trennung sowie daraus abschätzbare Raumzeitausbeuten bzw. Angaben über die Wirtschaftlichkeit.
- In einem Artikel von Venkatachalam et al (J. Electrochem. Soc. India, 1986, 35-2, 127) wird der Einfluss von Stromdichte, Elektrolytkonzentration, Elektrolysezeit und Wechselstromfrequenz auf die Effektivität der Ni-Auflösung beim Elektrolysieren von Nickel-Basissuperlegierungsschrotten in Säuren untersucht. Dabei lag die niedrigste gewählte Wechselstromfrequenz allerdings bei 25 Hz (gescreenter Bereich: 25-150 Hz).
- Gemäß WO 96/14440 wird zur Rückgewinnung der metallischen Bestandteile aus Superlegierungen ein Aufschlussverfahren genutzt, das auf einer anodischen Oxidation der Legierung in einem Elektrolysebad mit einer protischen, organischen Lösemittelkomponente beruht. In dieser Patentschrift wird ausgeführt, dass der Elektrolytlösung maximal 10 % Wasser hinzugefügt werden können, damit das Verfahren noch erfindungsgemäß funktioniert (ansonsten Bildung eines schwer verarbeitbaren Gels und Passivierung der Anodenoberfläche und damit Abbruch der Elektrolyse). Die Aufarbeitung des elektrolytisch gewonnenen Filtrationsrückstandes erfolgt beispielsweise thermisch über Calcination nach Anrühren in Kalkmilch, wobei das Calcinationsprodukt seinerseits anschließend nach üblichen hydrometallurgischen Trennoperationen weiter aufgearbeitet wird.

Gegenstand der vorliegenden Erfindung ist nun ein Verfahren zum Aufschluss von Superlegierungen, wobei beide Elektroden einer elektrochemischen Zelle aus der aufzuschließenden Superlegierung gebildet werden, und der Elektrolysestrom mit einer Frequenz von 0,005 bis 5 Hz, vorzugsweise 0,08 bis 2 Hz, insbesondere bevorzugt 0,01 bis 1 Hz, umgepolt wird. Superlegierungen im Sinne der vorliegenden Erfindung sind Legierungen, die als Hauptkomponente 50 bis 75 Gew.-% Nickel, jeweils 3 bis 15 Gew.-% mindestens eines der Elemente Kobalt, Chrom und gegebenenfalls Aluminium, sowie 1 bis 10 Gew.-% eines oder mehrere der Elemente Tantal, Niob, Wolfram, Molybdän, Rhenium, Platin und Hafnium enthalten.

Derartige Superlegierungen sind einem Aufschluss mittels Gleichstromelektrolyse in wässrigen Lösungen nicht zugänglich, da sich bereits nach kurzer Elektrolysezeit eine oberflächliche Passivierungsschicht ausbildet, die den Elektrolysestrom zum Erliegen bringt.

Es wurde gefunden, dass der elektrolytische Aufschluss dann energetisch sehr günstig und effektiv durchgeführt werden kann, wenn ein sehr niedrig frequenter Elektrolysestrom eingesetzt wird. Überraschenderweise wurden dabei Stromeffektivitäten von bis zu 150 %, im Allgemeinen zwischen 120 und 140 %, gefunden, die darauf schließen lassen, dass neben der elektrolytischen Auflösung auch ein chemischer Auflösungsprozess stattfindet, wobei der diesem zusätzlichen chemischen Auflösungsprozess zugrundeliegende Mechanismus nicht vollständig verstanden ist. Denkbar ist, dass durch Gasentwicklung die Passivierungsschicht unter Einschluss metallischer Bestandteile abgesprengt wird, die dann einer Oxidation durch Säureangriff ausgesetzt werden oder dass Grenzschichteffekte bzw. Effekte im Zusammenhang mit dem Auf- und Abbau von Grenzschichten zu der erhöhten Stromeffektivität führen.

Erfindungsgemäß wird als Elektrolyt eine sauerstoff-freie anorganische Säure enthaltende Lösung eingesetzt, vorzugsweise eine anorganische Säure wie Salzsäure, bevorzugt Salzsäure, insbesondere bevorzugt eine Salzsäurelösung mit einem Gehalt von 15 bis 25 Gew.-% HCl. Aber auch Mischungen von Salzsäure und Schwefelsäure können unter Berücksichtigung nachfolgender Stufen und Rückläufe vorteilhaft eingesetzt werden.

Die Elektrolyse wird vorzugsweise bei einer Elektrolysestromdichte von 80 bis 600 mA/cm² Querschnittsfläche der Elektrolysezelle betrieben. Dabei beträgt die Elektrolysespannung zwischen den Elektroden je nach Elektrolytleitfähigkeit, Stromdichte und Abstand der Elektroden zwischen 2 und 6 Volt. Erfindungsgemäß bevorzugt wird der elektrochemische Aufschluss bei konstantem Elektrolysestrom durchgeführt. Vorzugsweise beträgt die Temperatur in der Elektrolysezelle 20 bis 100°C, besonders bevorzugt 60 bis 80°C.

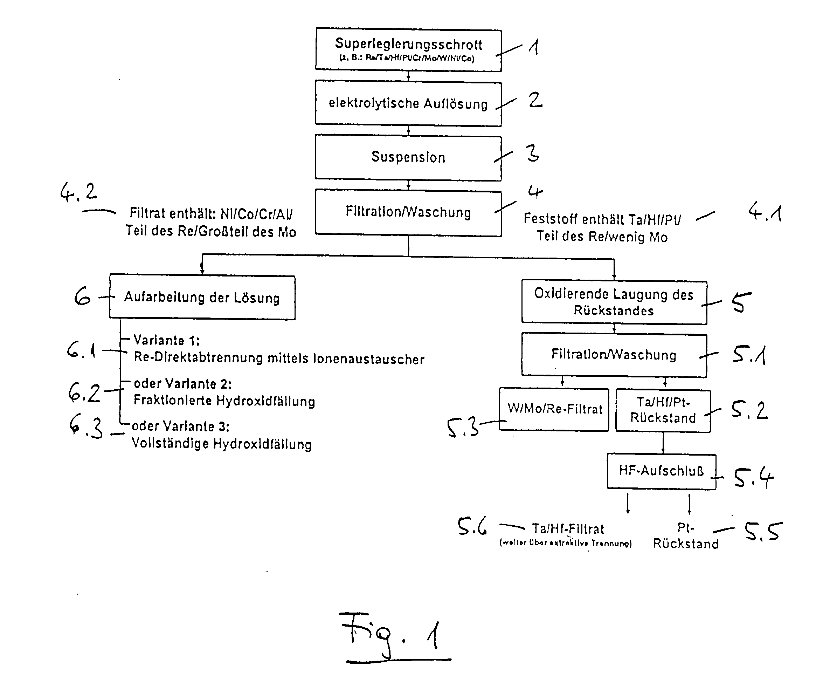

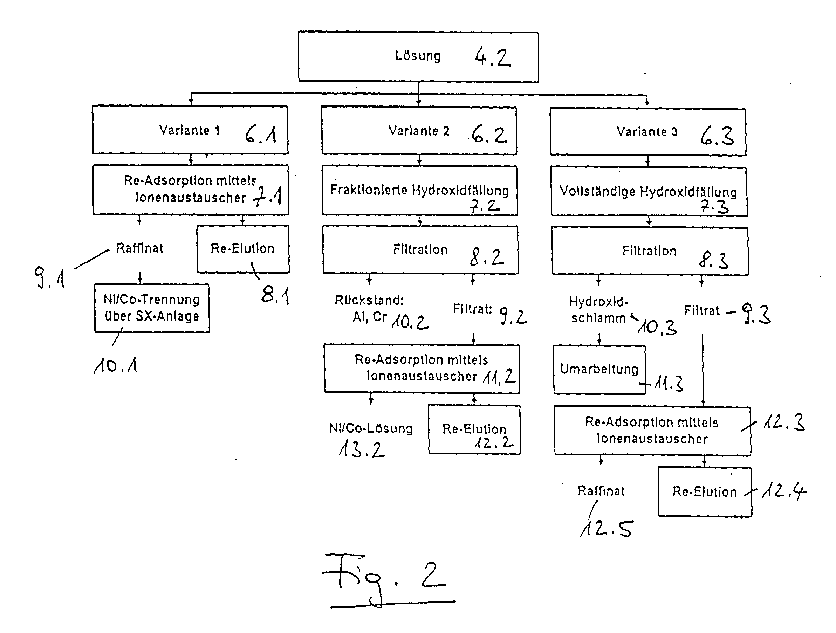

Die erfindungsgemäß elektrochemisch aufgeschlossene Superlegierung wird anschließend zur Rückgewinnung der Wertstoffe, insbesondere Rhenium, Platin, Tantal und Hafnium in an sich bekannter Weise aufgearbeitet. Dies ist in den beigefügten Figuren 1 und 2 schematisch dargestellt.

Gemäß Figur 1 wird die Superlegierung, die die Elemente Rhenium, Tantal, Hafnium, Platin, Chrom, Molybdän, Wolfram, Nickel und Kobalt enthalten kann, erfindungsgemäß elektrochemisch aufgeschlossen (2), wobei eine Suspension (3) anfällt, aus der nach Filtration und gegebenenfalls Waschung des Filterrückstands (4) ein Filterrückstand (4.1) erhalten wird, der die Elemente Tantal, Hafnium und Platin, sowie ein Teil des Rheniums und wenig Molybdän enthält. Im Filtrat (4.2) sind die Elemente Nickel, Kobalt, Chrom und Aluminium, ein Teil des Rheniums und die Hauptmenge des Molybdäns enthalten.

Zur weiteren Aufarbeitung wird der Filterrückstand (4.1) mittels oxidierender Laugung (5) durch Aufschlämmen in VE-Wasser, Zugabe von Natriumhydroxidlösung, Erhitzen auf eine Temperatur von 65 bis 90°C, Versetzen mit Wasserstoffperoxidlösung unter Rühren weiter aufgeschlossen. Die abgekühlte Suspension wird filtriert (5.1) und der Filterrückstand gewaschen. Das Wolfram, Molybdän und einen Teil des Rhenium und wenig Pt enthaltende Filtrat (5.3) kann in an sich bekannter Weise mittels stark basischer Ionenaustauscher weiter aufgetrennt werden. Der Tantal-, Hafnium- und Platin-Werte enthaltende Filterrückstand (5.2) wird, sofern Platin vorhanden ist, über einen Flusssäureaufschluss (5.4) zur Solubilisierung der Tantal/Hafnium-Werte weiter aufgearbeitet. Der Rückstand des HF-Aufschlusses (5.4) enthält die Platin-Werte (5.5). Das Filtrat (5.6) enthält die Tantal/Hafnium-Werte, die durch Extraktion mit MIBK weiter aufgetrennt werden können.

Für die Aufarbeitung (6) des Filtrates (4.2), das aus der Filtration (4) gewonnen wurde, stehen drei Varianten zur Verfügung, die in Figur 2 erläutert werden. Gemäß Variante 1 (6.1) wird das Filtrat (4.2) aus Figur 1 über einen Ionenaustauscher (7.1) geleitet und das Rhenium als Eluat (8.1) gewonnen. Aus dem Raffinat (9.1) können die Nickel/Kobalt-Einheiten über eine solvent-extractions (SX-)-Anlage abgetrennt werden (10.1).

Gemäß Variante 2 (6.2) wird das Filtrat (4.2) einer fraktionierten Hydroxidfällung (7.2) unterzogen, wobei nach Filtration (8.2) ein Aluminium und Chrom enthaltener Rückstand (10.2) erhalten wird und ein Filtrat (9.2) aus dem mittels Ionenaustauscher (11.2) Rhenium abgetrennt und durch Elution (12.2) gewonnen wird. Das Raffinat (13.2) besteht aus einer Nickel/Kobalt-Lösung.

Gemäß Variante 3 (6.3) wird eine vollständige Hydroxidfällung (7.3) durchgeführt, wobei nach Filtration der erhaltene Hydroxidschlamm (10.3) auch Nickel und Kobalt enthält. Der Hydroxidschlamm kann in üblicher Weise umgearbeitet werden (11.3). Aus dem Filtrat (9.3) der Filtration (8.3) wird mittels Ionenaustauscher (12.3) Rhenium adsorbiert und durch Elution (12.4) gewonnen.

### Beispiel

In eine aus Polypropylen angefertigte 15 Liter Elektrolysezelle werden 10,4 kg verdünnte Salzsäurelösung (18,5 Gew.-%) vorgelegt. Als Elektroden dienen zwei mit Superlegierungsschrotten befüllte Titankörbe mit einem Gesamtinhalt von 8,0 kg Schrott (Zusammensetzung, Gew.-%: 8,5 Ta, 3,1 Re, 5,8 W, 9,8 Co, 60,9 Ni, 4,9 Cr, 5,1 Al, 1,9 Mo). Der Elektrodenabstand beträgt ca. 2 cm. Die elektrolytische Auflösung erfolgt bei 70°C mittels eines Rechteckstromes bei einer Frequenz von 0,5 Hz, einer Stromstärke von 50 Ampere und einer resultierenden Spannung von ca. 3 bis 4 Volt. Nach 25 Stunden Elektrolysezeit beträgt die ab- bzw. aufgelöste Schrottmenge 1,6 kg. Die entstehende Suspension wird filtriert und der Rückstand (1) mit 0,63 kg VE-Wasser gewaschen.

Der Filtrationsrückstand (1) von 0,422 kg enthält Gew.-%: 39,5 Ta₂O₅, 6,2 ReO₂, 27,8 WO₃, 1,6 MoO₃ und 25 H₂O. Das Filtrat wird mit dem Waschwasser vereinigt und in Lösung (1) befinden sich Gew.-%: 0,3 HReO₄, 0,4 H₂MoO₄, 2,8 CoCl₂, 17,6 NiCl₂, 1,9 CrCl₃, 3,3 AlCl₃ und 0,2 HCl.

### Aufarbeitung des Filtrationsrückstandes (1):

In einem 2 Liter Becherglas wird der feuchte Filtrationsrückstand unter Rühren in 195 g VE-Wasser aufgeschlämmt, mit 160 g 50 %iger Natriumhydroxidlösung versetzt und auf 80°C erwärmt. Anschließend werden 41 g 30 %ige Wasserstoffperoxidlösung zudosiert. Nach 2 Stunden Rühren bei 80°C wird die Suspension abgekühlt, filtriert und der Rückstand mit 0,370 kg VE-Wasser gewaschen. Der Filtrationsrückstand (2) von 0,222 kg enthält Gew.-%: 74,9 Ta₂O₅, 0,1 ReO₂, 1,0 WO₃ und 23,0 H₂O. Das Filtrat wird mit dem Waschwasser vereinigt und in Lösung (2) befinden sich Gew.-%: 2,3 NaReO₄, 10,6 Na₂Wo₄, 0,7 Na₂MoO₄ und 2,2 NaOH.

### Aufarbeitung des Filtrationsrückstandes (2):

Wolfram und Rhenium werden auf bekannte Weise mittels stark basischer Ionenaustauscherharze getrennt und können hiernach als Vorstoffe für die Produktion von Wolfram- und Rheniumprodukten der weiteren Wertschöpfungskette zugeführt werden.

### Aufarbeitung der Lösung (1):

In einen 20 Liter Rührreaktor werden zu der Lösung 4,3 kg 50 %ige Natriumhydroxidlösung gegeben und auf 80°C temperiert. Nach 2 Stunden Reaktionszeit wird die Suspension filtriert und der Rückstand mit 6,5 kg VE-Wasser gewaschen. Der resultierende Filtrationsrückstand (3) von 3,96 kg enthält Gew.-%: 6 Al(OH)₃, 6,2 Co(OH)₂, 38,9 Ni(OH)₂, 3,9 Cr(OH)₃, 45 H₂O. Das Filtrat wird mit dem Waschwasser vereinigt und in Lösung (3) befinden sich Gew.-%: 6 Al(OH)₃, 6,2 Co(OH)₂, 38,9 Ni(OH)₂, 38,9 Ni(OH)₂, 3,9 Cr(OH)₃, 45 H₂O. Das Filtrat wird mit dem Waschwasser vereinigt und in Lösung (3) befinden sich %: 0,2 NaReO₄ und 0,3 Na₂MoO₄.

### Aufarbeitung der Lösung (3):

Molybdän und Rhenium werden auf bekannte Weise mittels stark basischer Ionenaustauscherharze getrennt und können hiernach als Vorstoffe für die Produktion von Molybdän- und Rheniumprodukten eingesetzt werden.

### Aufarbeitung des Filtrationsrückstandes (3):

Der Filtrationsrückstand kann auf bekannte Weise z.B. reduzierender Schmelze zu Ni-Co-Legierungen umgearbeitet werden.

## Patentansprüche

1. Verfahren zur Rückgewinnung von Wertmetallen aus Superlegierungen durch elektrochemischen Aufschluss, wobei die Superlegierung sowohl als Anode als auch als Kathode eingesetzt wird, und der Elektrolysestrom mit der Frequenz von 0,005 bis 5 Hz umgepolt wird als Elektrolyt eine anorganische Säure eingesetzt wird und die Elektrolytlösung eine sauerstofffreie anorganische Säure enthält.

2. Verfahren nach Anspruch 1, **dadurch gekennzeichnet, dass** die Superlegierung als Hauptbestandteile eines oder mehrere der Metalle Co, Ni, Cr oder Al und als Nebenbestandteile eines oder mehrere der Elemente Ta, Re, W, Mo, Hf oder Pt enthält.

3. Verfahren nach Anspruch 2, **dadurch gekennzeichnet, dass** die Superlegierung 1 bis 10 Gew.-% Re enthält.

4. Verfahren nach einem der Ansprüche 1 bis 3, **dadurch gekennzeichnet, dass** der elektrochemische Aufschluss bei der Elektrolysespannung von 2 bis 6 Volt bei konstantem Elektrolysestrom durchgeführt wird.

5. Verfahren nach Anspruch 1, **dadurch gekennzeichnet, dass** als sauerstofffreie anorganische Säure Salzsäure eingesetzt wird.

6. Verfahren nach Anspruch 5, **dadurch gekennzeichnet, dass** durch den elektrochemischen Aufschluss die Elemente Co, Ni, Cr und Al als in der Elektrolysesole gelöste Salze und die Elemente Ta, W, Hf und Pt als filtrierbare Oxide gewonnen werden, so dass durch Filtration der Elektrolysesole eine im Wesentlichen quantitative Trennung der beiden Elementgruppen erfolgen kann.

## Claims

1. Process for recovery of valuable metals from superalloys by electrochemical decomposition, the superalloy being used both as the anode and as the cathode, and the polarity of the electrolysis current being reversed with a frequency of from 0.005 to 5 Hz, an inorganic acid being used as the electrolyte and the electrolyte containing an oxygen-free inorganic acid.

2. Process according to Claim 1, **characterised in that** the superalloy contains one or more of the metals Co, Ni, Cr or Al as major constituents and one or more of the elements Ta, Re, W, Mo, Hf or Pt as minor constituents.

3. Process according to Claim 2, **characterised in that** the superalloy contains from 1 to 10 wt.% of Re.

4. Process according to one of Claims 1 to 3, **characterised in that** the electrochemical decomposition is carried out with an electrolysis voltage of from 2 to 6 volts at a constant electrolysis current.

5. Process according to Claim 1, **characterised in that** the oxygon-free inorganic acid used is hydrochloric acid.

6. Process according to Claim 5, **characterised in that**, as a result of the electrochemical decomposition, the elements Co, Ni, Cr and Al are obtained as salts dissolved in the electrolysis brine and the elements Ta, W, Hf and Pt are obtained as filterable oxides, so that essentially quantitative separation of the two element groups can be carried out by filtration of the electrolysis brine.

## Revendications

1. Procédé de récupération de métaux précieux à partir de superalliages par fusion électrochimique, le superalliage étant utilisé aussi bien comme cathode que comme anode, et le courant d'électrolyse subissant une inversion de pôles à une fréquence comprise entre 0,005 et 5 Hz, un acide inorganique étant utilisé comme électrolyte et la solution électrolytique contenant un acide inorganique dépourvu d'oxygène.

2. Procédé selon la revendication 1, **caractérisé en ce que** le superalliage contient un ou plusieurs métaux sélectionnés parmi Co, Ni, Cr ou A1 comme composants principaux et un ou plusieurs éléments sélectionnés parmi Ta, Re, W, Mo, Hf ou Pt comme composants secondaires.

3. Procédé selon la revendication 2, **caractérisé en ce que** le superalliage contient entre 1 et 10 % en poids de Re.

4. Procédé selon l'une quelconque des revendications 1 à 3, **caractérisé en ce que** la fusion électrochimique est réalisée à une tension d'électrolyse comprise entre 2 et 6 volts à courant d'électrolyse constant.

5. Procédé selon la revendication 1, **caractérisé en ce que** de l'acide chlorhydrique est utilisé comme acide inorganique dépourvu d'oxygène.

6. Procédé selon la revendication 5, **caractérisé en ce que** les éléments Co, Ni, Cr et Al sont récupérés par la fusion électrochimique sous forme de sels dissous dans l'eau saline d'électrolyse et les éléments Ta, W, Hf et Pt sous forme d'oxydes filtrables, ce qui permet une séparation sensiblement quantitative des deux groupes d'éléments par filtrage de l'eau saline d'électrolyse.
